# EUROPÄISCHE PATENTSCHRIFT

(11) **EP 2 048 403 B1**
(45) Veröffentlichungstag und Bekanntmachung des Hinweises auf die Patenterteilung: **01.02.2012**
(21) Anmeldenummer: 08013831.6
(22) Anmeldetag: 01.08.2008
(51) Int. Cl.: F16D 65/097

(54) **Bremsbelag für eine Scheibenbremse**
Brake pad for a disc brake
Garniture de frein pour un frein à disque

(30) Priorität: 14.08.2007 DE 202007011363 U
(43) Veröffentlichungstag der Anmeldung: 15.04.2009
(73) Patentinhaber: KNORR-BREMSE Systeme für Nutzfahrzeuge GmbH, 80809 München (DE)
(72) Erfinder: Wimmer, Josef, 94474 Vilshofen (DE)
(74) Vertreter: Mattusch, Gundula

(56) Entgegenhaltungen:
- EP-A2- 1 452 765
- DE-A1- 4 020 287
- DE-A1- 10 026 547

## Beschreibung

Die vorliegende Erfindung betrifft einen Bremsbelag für eine Scheibenbremse nach dem Oberbegriff des Anspruchs 1.

Ein derartiger Bremsbelag ist aus der DE 40 20 287 A1 bekannt. Die dort gezeigte und beschriebene Konstruktion hat sich in der Praxis durchaus bewährt. Dabei ist die Bremsbelaghalterung so ausgebildet, dass die Belaghaltefeder einen Griff bildet, so dass die Baueinheit Belaghaltefeder/Bremsbelag beispielsweise zur Montage bzw. Demontage sehr leicht zu handhaben ist.

Zur Festlegung der Belaghaltefeder sind an der Belagträgerplatte mit Hinterschneidungen versehene Laschen angeformt, die Langlöcher in der Belaghaltefeder durchtreten, die dabei die Hinterschneidungen hintergreifen, so dass ein Formschluss gebildet ist, durch den die Belaghaltefeder in radialer Richtung gehalten wird und zwar so, dass ein selbsttätiges Lösen in entspannter oder teilentspannter Lage ausgeschlossen ist.

Da die Belaghaltefeder bei Belastung, also bei einem Zusammendrücken gegen die Belagträgerplatte, aus dem mit den Haltelaschen gebildeten Formschluss herausgedrückt wird, ist diese Art der Sicherung ungenügend. In der Praxis tritt häufig die Situation ein, dass vor einem Einbau des Bremsbelages nach dessen Vormontage bei einem Verpacken und/oder Transportieren zum Einbauort bzw. zur Lagerstelle unbeabsichtigt die Belaghaltefeder so weit zusammengedrückt wird, dass sie sich aus dem Verbund mit der Belagträgerplatte löst. Im günstigsten Fall muss die Belaghaltefeder nachträglich nochmals mit dem Bremsbelag im übrigen verbunden werden, was naturgemäß nur mit einem entsprechenden Zeitaufwand zu realisieren ist.

Darüber hinaus besteht bei einem Auswechseln des Bremsbelages die Gefahr, dass, da werkzeuglos zu entfernen, die Belaghaltefeder auf eine neue Belagträgerplatte aufgesetzt wird, wodurch die Betriebssicherheit des Bremsbelages insgesamt unter Umständen gefährdet ist.

In der DE 100 26 547 A1 ist ein Bremsbelag geoffenbart, dessen Belaghaltefeder mittels Nieten an der Belagträgerplatte befestigt ist. Dabei weisen die Haltelaschen, die in offene Schlitze der Belaghaltefeder eingreifen, Langlöcher auf, in denen die Nieten geführt sind, die endseitig mit der Belaghaltefeder verbunden sind.

Der Erfindung liegt die Aufgabe zugrunde, einen Bremsbelag der gattungsgemäßen Art so weiterzuentwickeln, dass er kostengünstiger montierbar ist und seine Betriebssicherheit dauerhaft verbessert wird.

Diese Aufgabe wird durch einen Bremsbelag mit den Merkmalen des Anspruchs 1 gelöst.

Durch diese Ausbildung des Bremsbelages wird erreicht, dass die Belaghaltefeder nach einer Verbindung mit der Belagträgerplatte in jedem Fall gesichert damit verbunden ist.

Ein Entfernen der Belaghaltefeder ist nur durch ein Zerstören des Sicherungsringes möglich, so dass ein unbeabsichtigtes Lösen, insbesondere durch Fremdeinwirkung, praktisch ausgeschlossen ist.

Naturgemäß ergibt sich dadurch eine wesentliche Verbesserung sowohl hinsichtlich der Funktionssicherheit als auch hinsichtlich der Montage.

Diesbezüglich ist in jedem Fall gewährleistet, dass nach einer erfolgten Vormontage der Belaghaltefeder, d.h. nach deren Anbringen an der Belagträgerplatte, diese Baueinheit Belaghaltefeder/Belagträgerplatte auch während eines Transports erhalten bleibt.

Nach einer vorteilhaften Weiterbildung der Erfindung kommen als Sicherungsringe Stahlringe zum Einsatz, die als Normteile erhältlich sind.

Wenn überhaupt, so sind lediglich geringfügige Modifizierungen der Haltelaschen erforderlich, wozu beispielsweise ein zweite Hinterschneidung zählen kann, die in der ersten, bislang schon vorhandenen Hinterschneidung gegenüberliegend angeordnet ist.

Prinzipiell reicht zwar die eine Hinterschneidung aus, um den Sicherungsring festzuhalten, jedoch stellt der Eingriff des Sicherungsringes in eine Haltelasche mit zwei Hinterschneidungen eine besonders sichere Variante der Befestigung dar.

Diese Modifizierung der Haltelasche ist mit sehr geringem fertigungstechnischen Aufwand möglich, wobei bei Ausbildung der Belagträgerplatte als Gussteil durch eine entsprechende Formgebung der Haltelasche die zusätzliche Hinterschneidung mit eingebracht wird, während diese zusätzliche Hinterschneidung bei einer als Blechteil ausgebildeten Belagträgerplatte gleichzeitig mit der ersten Hinterschneidung, vorzugsweise ausgestanzt wird.

Im übrigen lässt sich die Erfindung auch hinsichtlich der Vormontage des Bremsbelages, also beim Befestigen der Belaghaltefeder an der Belagträgerplatte mit geringem Aufwand realisieren, d.h., insoweit ist problemlos eine Automatisierung der entsprechenden Arbeitsgänge möglich.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

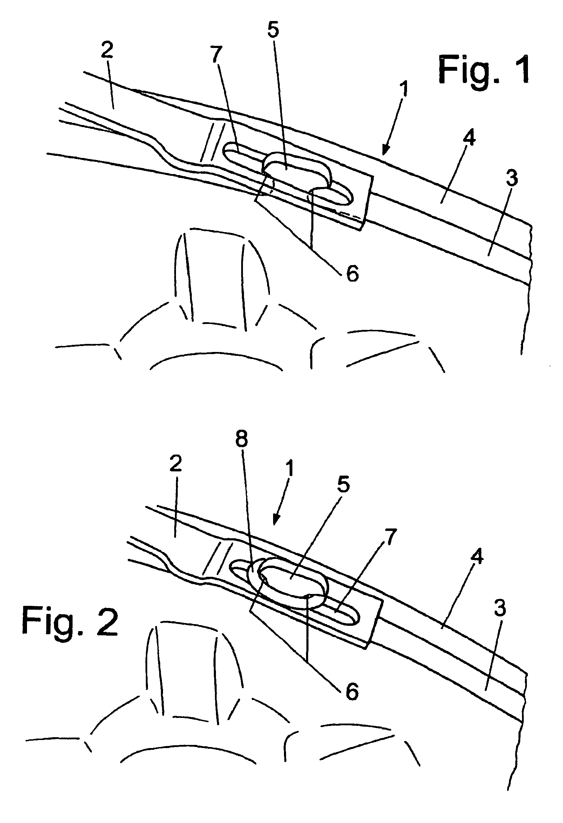

- Figuren 1 und 2: jeweils einen Teilausschnitt eines Bremsbelages in einer perspektivischen Ansicht, jeweils in verschiedenen Vormontage-Stellungen.

In den Figuren ist ein Bremsbelag 1 für eine Scheibenbremse, insbesondere eines Nutzfahrzeuges dargestellt, der eine als bogenförmige Blattfeder ausgebildete Belaghaltefeder 2 aufweist, die in den Endbereichen, von denen in den Figuren jeweils lediglich einer dargestellt ist, mit jeweils einem Langloch 7 versehen ist, in dem eine zugeordnete, mit einer Hinterschneidung 6 versehene Haltelasche 5 einer Belagträgerplatte 3 geführt ist. An dieser Belagträgerplatte 3 ist ein Reibbelag 4 befestigt, der in Funktion des Bremsbelages 1 eine Bremsscheibe kontaktiert.

In der Figur 1 ist eine Vormontage-Stellung des Bremsbelages 1 dargestellt, in der die Belaghaltefeder 2 auf die Haltelasche 5 aufgesteckt, jedoch noch nicht gesichert ist.

Dies ist in der Figur 2 gezeigt. Dabei ist die Belaghaltefeder 2 mittels eines Sicherungsringes an der Belagträgerplatte 3 gehalten, der im vorliegenden Ausführungsbeispiel in zwei sich gegenüberliegende, sich quer zur Längsachse des Langloches 7 erstreckende Hinterschneidungen 6 eingreift.

Durch Verformung des vorzugsweise im Sinne eines Torus ausgebildeten Sicherungsringes 8 wird dieser in seiner Form so verändert, dass er beidseitig in die Hinterschneidungen 6 eingreift, so dass ein dauerhafter Formschluss entsteht, der nur durch Zerstörung bzw. entsprechende Deformierung des Sicherungsringes 8 gelöst werden kann.

Anstelle der gezeigten Hinterschneidungen 6 sind auch solche denkbar, die in Form von Kerben an den Längsseiten der Haltelaschen 5 vorgesehen sind, die dann parallel zur Längserstreckung des Langloches 7 verlaufen. In jedem Fall ist der Sicherungsring 8 so an der Haltelasche 5 befestigt, dass die Belaghaltefeder 2 widerstandsfrei relativ zum Sicherungsring 8 bewegbar ist.

## Patentansprüche

1. Bremsbelag für eine Scheibenbremse, insbesondere für ein Nutzfahrzeug, der eine als bogenförmige Blattfeder ausgebildete Belaghaltefeder (2) aufweist, die in zumindest einem Endbereich mit einem Langloch (7) versehen ist, in dem eine zugeordnete, mit einer Hinterschneidung (6) versehene Haltelasche (5) einer Belagträgerplatte (3) geführt ist, **dadurch gekennzeichnet, dass** die Belaghaltefeder (2) mittels eines Sicherungsringes (8) an der Haltelasche (5) an der Belagträgerplatte (3) gehalten ist, wobei der Sicherungsring (8) formschlüssig in der Hinterschneidung (6) einliegt.

2. Bremsbelag nach Anspruch 1, **dadurch gekennzeichnet, dass** der Sicherungsring (8) aus einem deformierten Metallring besteht.

3. Bremsbelag nach Anspruch 1 oder 2, **dadurch gekennzeichnet, dass** der Sicherungsring (8) aus einem Stahlring besteht.

4. Bremsbelag nach einem der vorhergehenden Ansprüche, **dadurch gekennzeichnet, dass** die Haltelasche (5) an zwei sich gegenüberliegenden Seiten jeweils mit einer Hinterschneidung (6) oder Kerbe versehen ist, in der der Sicherungsring (8) einliegt.

5. Bremsbelag nach einem der vorhergehenden Ansprüche, **dadurch gekennzeichnet, dass** der Sicherungsring (8) als Torus ausgebildet ist.

6. Bremsbelag nach einem der vorhergehenden Ansprüche, **dadurch gekennzeichnet, dass** die Belaghaltefeder (2) relativ zum Sicherungsring (8) bewegbar ist.

## Claims

1. Brake pad for a disc brake, in particular for a utility vehicle, which comprises a pad holding spring (2) formed as a curved leaf spring which is provided in at least one end region with an elongated hole (7), in which an assigned retaining tab (5) of a pad carrier plate (3) provided with an undercut (6) is guided, **characterised in that** the pad holding spring (2) is held by means of a securing ring (8) on the retaining tab (5) on the pad carrier plate (3), wherein the securing ring (8) lies in a shape locking way in the undercut (6).

2. Brake pad according to claim 1, **characterised in that** the securing ring (8) consists of a deformed metal ring.

3. Brake pad according to claim 1 or 2, **characterised in that** the securing ring (8) consists of a steel ring.

4. Brake pad according to one of the preceding claims, **characterised in that** the retaining tab (5) is provided on two opposing sides respectively with an undercut (6) or notch, in which the securing ring (8) lies.

5. Brake pad according to one of the preceding claims, **characterised in that** the securing ring (8) is formed as a torus.

6. Brake pad according to one of the preceding claims, **characterised in that** the pad holding spring (2) can be moved relative to the securing ring (8).

## Revendications

1. Garniture de frein pour un frein à disque, notamment pour un véhicule utilitaire, qui comporte un ressort (2) de maintien de la garniture constitué en ressort à lame arqué, qui est pourvu au moins dans une zone d'extrémité d'une boutonnière (7) dans laquelle est guidée une éclisse (5) de maintien, associée et pourvue d'une contre-dépouille (6), d'une plaque (3) de support de garniture, **caractérisée en ce que** le ressort (2) de maintien de la garniture est maintenu sur la plaque (3) de support de la garniture au moyen d'une bague (8) de sûreté sur l'éclisse (5) de maintien, la bague (8) de sûreté pénétrant à complémentarité de forme dans la contre-dépouille (6).

2. Garniture de frein suivant la revendication 1, **caractérisée en ce que** la bague (8) de sûreté est constituée d'une bague métallique déformée.

3. Garniture de frein suivant la revendication 1 ou 2, **caractérisée en ce que** la bague (8) de sûreté est une bague en acier.

4. Garniture de frein suivant l'une des revendications précédentes, **caractérisée en ce que** l'éclisse (5) de maintien est munie sur deux côtés opposés respectivement d'une contre-dépouille (6) ou d'une encoche dans laquelle pénètre la bague (8) de sûreté.

5. Garniture de frein suivant l'une des revendications précédentes, **caractérisée en ce que** la bague (8) de sûreté est constituée sous la forme d'un Tor.

6. Garniture de frein suivant l'une des revendications précédentes, **caractérisée en ce que** le ressort (2) de maintien de la garniture est mobile par rapport à la bague (8) de sûreté.
